# EUROPEAN PATENT APPLICATION

(11) **EP 2 022 738 A1**
(43) Date of publication of application: **11.02.2009**
(21) Application number: 07381057.4
(22) Date of filing: 07.08.2007
(51) Int. Cl.: B65G 67/02, B65G 67/20

(54) **Vehicle loading and unloading device and vehicle loading and unloading procedure using said device**

(71) Applicant: KH LLoreda, S.A., 08420 Canovelles (Barcelona) (ES)
(72) Inventor: LLOREDA PIÑA, Josep Mª, 08420, CANOVELLES (ES)
(74) Representative: Esteban Perez-Serrano, Maria Isabel

(57) **Abstract**

The first aspect of the invention consists of a vehicle loading and unloading device (3) which facilitates the transfer from, for example a loading bay, of pallets (2) from the bay to the interior loading platform (1) of the vehicle. This device is characterised by its extensible horizontal structure (3.1) which is able to introduce the load situated between the device and the vehicle platform into the vehicle interior. It is also provided with the means for modifying the orientation in order to enable an adequate introduction of the load (2), according to the orientation of the vehicle platform (1).
A second aspect of the invention consists of a vehicle loading and unloading procedure which makes use of the device as part of its loading and unloading strategy.

## Description

### OBJECT OF THE INVENTION

The first aspect of the invention consists of a vehicle loading and unloading device which facilitates the transfer of pallets from, for example, a loading bay, to the interior loading platform of the vehicle.

This device is characterised by its extensible horizontal structure which is able to introduce the load situated between the device and the vehicle platform into the vehicle interior. Not only does the device permit loading but also unloading of the vehicle.

It is also provided with the means for modifying the orientation to enable an adequate introduction of the load according to the orientation of the vehicle platform.

A second aspect of the invention consists of a vehicle loading and unloading procedure which makes use of the device as part of its loading and unloading strategy.

### BACKGROUND TO THE INVENTION

Vehicle loading and unloading using a loading platform is normally carried out using forklift trucks in which flexibility of movement round industrial premises is an important factor.

When loads are considerable, the forklifts able to handle such loads also tend to be heavy, as otherwise they would be unable to provide sufficient stability.

This heavy weight prevents the truck from entering the vehicle interior and requires manual movement of the load, for example, using a pallet lifter which is also manually operated.

When the load is heavy and there is any type of inclined plane involved, however small, this makes manual handling of the pallet lifter difficult, to the detriment of efficient practice as it tends to slightly increase loading time.

This increase in loading time is not the only disadvantage since the reduction in effectiveness caused by the lack of stability increases the probability of accidents or overturning of the load in handling operations.

The present invention consists of a loading and unloading device and procedure in which the device automates vehicle loading operations.

### DESCRIPTION OF THE INVENTION

An initial aspect of the invention consists of a vehicle loading and unloading device which overcomes the disadvantages described above.

The device essentially comprises:
- a support base,
- an extensible horizontal structure which is provided with fixed and mobile components which enable it to be extended,
- a support point situated on the support base where said support point links the support base to the fixed components of the extensible structure,
- a load carrying structure situated solid to the mobile components of the extensible structure,
where the extensible structure enables the load carrying structure to be situated between a point of the support base and a point of the loading platform of the vehicle.

A space is provided between this device and the vehicle which may be occupied by a load. The load may be deposited by a conventional forklift truck. The invention device, with its essentially horizontal displacement is able to pick up the load and introduce it onto the vehicle loading platform simply by extending its extensible structure.

It is possible to consider modes of execution of the propulsion of the essential components of the device in order to achieve extension of the extensible structure or the support point of the supporting base.

In this case the means of achieving the link between the extensible structure and the support base is of particular interest as this may be carried out in a rotary manner according to a vertical rotation axis.

This rotary link enables the correct orientation of the extension direction, and therefore the essentially horizontal displacement of the load towards the interior of the vehicle.

Throughout this report, when the terms horizontal or essentially horizontal are used this means that there may be small degrees of inclination due, for example, to elevation of the load.

This possible need for correct orientation may also be due to initial incorrect positioning of the load to be introduced in the reception area, although this may be compensated by, for example, incorporating positioning references through support which require that the load is deposited in a sole position.

Other additional elements which may be incorporated in the device include guidance means and also lateral and vertical displacement of the load carrying structure with respect to the mobile components of the extensible structure. It is customary for the fixed components of the extensible structure to be at one end and the mobile components at the other; without prejudice to the fact that the extension is carried out by various intermediate sections.

Each of these degrees of freedom shall be assisted by propulsion means, such as, for example, hydraulic means. Other construction details of the invention are described in the detailed description of the invention below.

A second aspect of the invention consists of a vehicle loading and unloading procedure which makes use of the device described.

In this procedure the loading consists of a series of stages; and unloading consists of carrying out a transfer of the load in the opposite direction.

The stages of the loading procedure are as follows:
- the load is deposited in the free space or reception area of the load situated between the device and the vehicle,
- the load is situated on the load support structure by means of partial extension of the extensible structure,
- the load is carried into the vehicle interior by extending the extensible structure to its final position within the vehicle.

And the unloading procedure is as follows:
- the extensible structure is extended until it faces the load support structure within the vehicle,
- the load and the support structure are picked up,
- the extensible structure retracts until it situates the load in the free space or load reception area situated between the device and the vehicle.

In either of the two procedures, it may be necessary, either before or after the retraction, to pick up the device by picking up the extensible structure until the load reception area is left free.

These series of stages may involve intermediate stages such as the raising and lowering of the load carrying structure when horizontal displacement is required, or when correcting the device orientation when it is not aligned with the vehicle platform, or with the load already introduced. That is, in any of these operations, adjustments may need to be made to the orientation and positioning of the load support structure through the mobility means incorporated in the load support structure.

### DESCRIPTION OF THE DRAWINGS

The present descriptive report is supplemented by a series of drawings illustrative of a preferred embodiment but not, however, restricting the invention in any way.

Figure 1 shows an elevated view of a portion of the vehicle with its loading platform, a loading bay and the device according to the first aspect of the invention, all of which is represented in diagram form.

Figure 2 shows a ground plan view of the same embodiment of the device where it is possible to distinguish the area where the load is placed for introduction into the vehicle, due to the fact that the device is in a withdrawn position.

Figures 3 and 4 show the same example of an embodiment of the device which is the subject of the invention in a perspective view, where figure 3 shows the pick up position of the extensible structure and figure 4 shows the extended position of the end where the load structure is situated.

### DETAILED EXPLANATION OF THE INVENTION

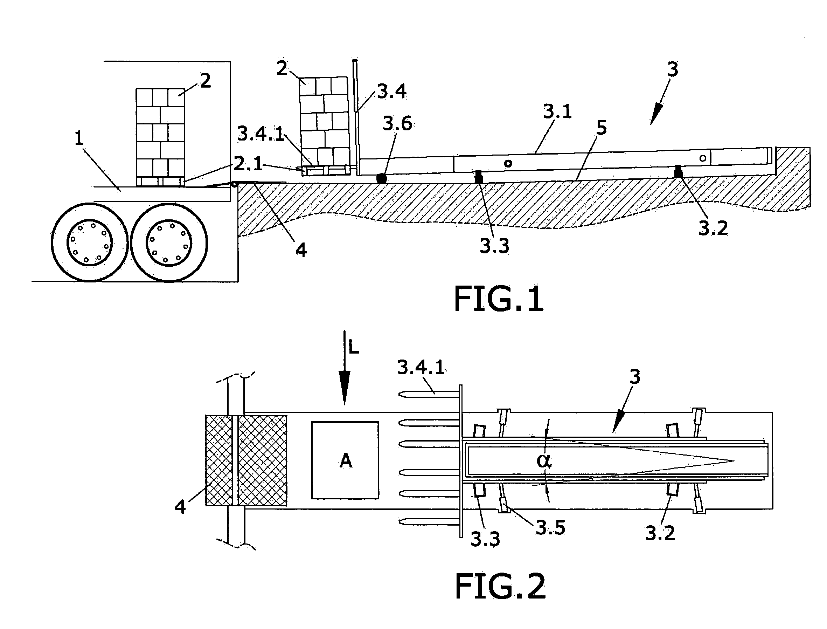

Figure 1 shows an example of an embodiment of the device which is the subject of the invention which will serve as a base for description of the various components.

This figure shows a portion of the vehicle corresponding to the back part where the load platform (1) ends.

This loading platform (1) is situated at a height close to the height of the upper horizontal surface of the bay which will serve as support base (5) for the device (3) according to the invention.

The possible difference in heights between the loading platform surface (1) and the support base surface (5) is covered in figure 1 by a ramp (4) made for example, from one or more metal plates.

In this example the support base (5) shows on the right a step which defines the position of the load device (3) according to this example.

Between the edge of the loading bay adjacent to the loading platform (1) and the device there is a space or reception area where the forklift truck (not depicted) leaves the pallet (2.1) with the load ready to be introduced into the vehicle.

When the load is resting on the load reception area, the device (3) according to the invention is required to pick up the load (2) by means of its horizontal extension capacity, and vertical extension when it needs to be raised to support it by means of claws (3.4.1), displacing it to the platform (1) in the interior of the vehicle.

This introduction may entail corrections in the orientation of the device and the support structure (3.4) of the load (2) which contains the grips (3.4.1); and the orientation of the support structure itself (3.4).

Having introduced the load (2) into the interior of the vehicle, the device (3) is picked up to leave space in the reception area of the load (2) in order to permit the forklift to deposit a new load (2).

As previously indicated, unloading would be the same, only now it would be the device (3) which is the subject of the invention which takes the load (2) from the interior of the vehicle and leaves it in the load reception area (2) in order to be removed using a forklift.

With respect to the invention device (3), the essential elements comprise at least the following:
- *A support base* (5). The support base (5) in this example of an embodiment consists of a loading bay. This is the deemed to be the fixed reference throughout the description. This support base (5) has been represented with a step which in this case has been made to coincide behind with the height of device (3) with this construction detail not being necessary.
- *An extensible structure (3.1)*. The extensible structure (3.1) permits horizontal displacement. The structure is provided with fixed and mobile components which permit extension. There may be different extension sections which will enable greater distances between the ends. The extension may be operated for example by means of hydraulic actuators which have not been represented here in order to ensure the clarity of the figures. These hydraulic actuators may be present in some or all of the elements of the invention requiring propulsion.
   In the example of an embodiment wheels (3.6) have been incorporated which are situated below and which enable part of the load to rest directly on the support base (5) or on the loading platform (1) during the displacement due to the extension. These same wheels (3.6) are those which enable the extensible structure (3.1) to be raised.
- *A support point* This example of an embodiment has made use of more than one support point, a first support point (3.2) and a second support point (3.3) due to structural requirements. These support points (3.2, 3.3) establish a link between the support base (5) and the fixed components of the extensible structure (3.1). In this example the support point, even if it is multiple, enables rotation of the extensible structure (3.1) for its correct orientation with respect to the loading platform (1) of the vehicle according to an angle (α).
- *A load (2) carrying structure (3.4).* The load (2) carrying structure (3.4) according to this example of an embodiment, is a structure provided with claws (3.4.1) which enter the interior of the planet (2.1) for the correct support of the load (2). The carrying structure (3.4) is solid to the mobile components of the extensible structure (3.1) and moves with them, displacing from the pick up point to the interior of the loading platform (1) of the vehicle.
   In this example of an embodiment the carrying structure (3.4) is provided with means of orientation with horizontal and vertical angular displacement (α) (pitching) which permits orientation of the pallet (2.1) and the load (2).
   For example, it is possible to compensate the angle (α) of the extensible structure in order to situate the load (2) parallel to the loading platform (1) of the vehicle in its interior when it is necessary to unload at the side of the platform (1). This angular displacement (α) according to a vertical axis is independent of the rotation permitted by the extensible structure (3.1). This load (2) carrying structure (3.4) also has means for lateral displacement activated hydraulically which enables additional adjustments in order to place the load (2) or to pick it up.
   The elevation of the load (2) carrying structure (3.4) may be carried out through these hydraulically activated means but it is also possible to incorporate elevation means in the wheels (3.6) supporting the extensible structure (3.1). This elevation is necessary in those cases in which the load (2) rests without being able to roll directly on the ground like a pallet (2.1).
   This device (3), making use of its extensible structure (3.1), enables the load (2) carrying structure (3.4) to be situated between a point of the support base (5) and a point of the loading platform (1) of the vehicle.
   Figure 2 shows an area (A) which is where the point of the support base (5) is situated where the device (3) picks up the load (2) in order to place it in the vehicle. As has been mentioned, in the opposite direction, the unloading will be at this point or reception place where the device (3) leaves the load (2).
   The line (L) indicated with an arrow shows the access direction of the forklift truck in order to deposit the load (3) ready for placing it in the vehicle.
   Figure 2 shows the points of support (3.2, 3.3) in arched sections enabling orientation of the device (3). Orientation adjustment means (3.5) exercise the requisite forces by means of actuators which for preference may be hydraulic.
   These means for changing orientation give rise to the angle (α) which permits the adjustment of the orientation of the load (2) in respect to the vehicle platform (1).

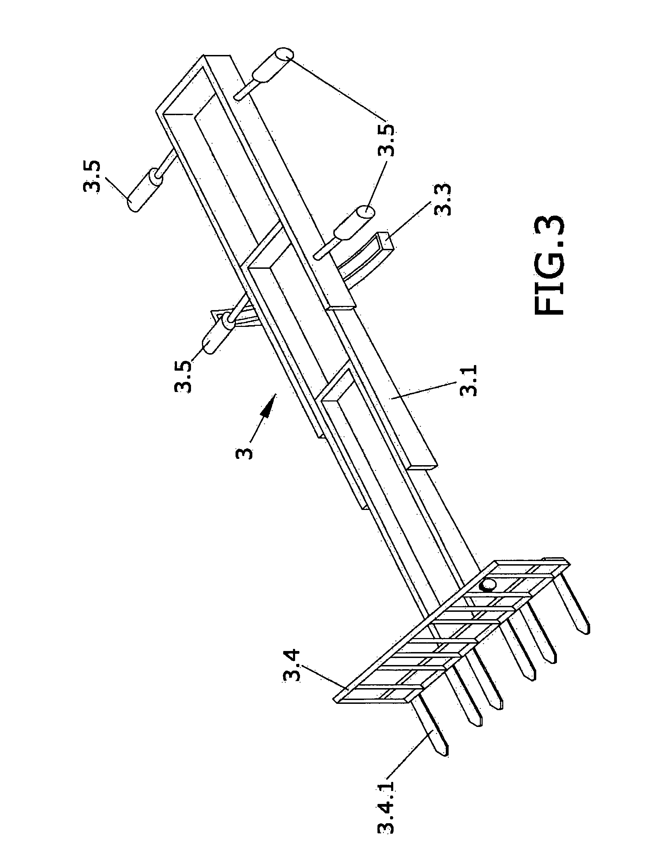

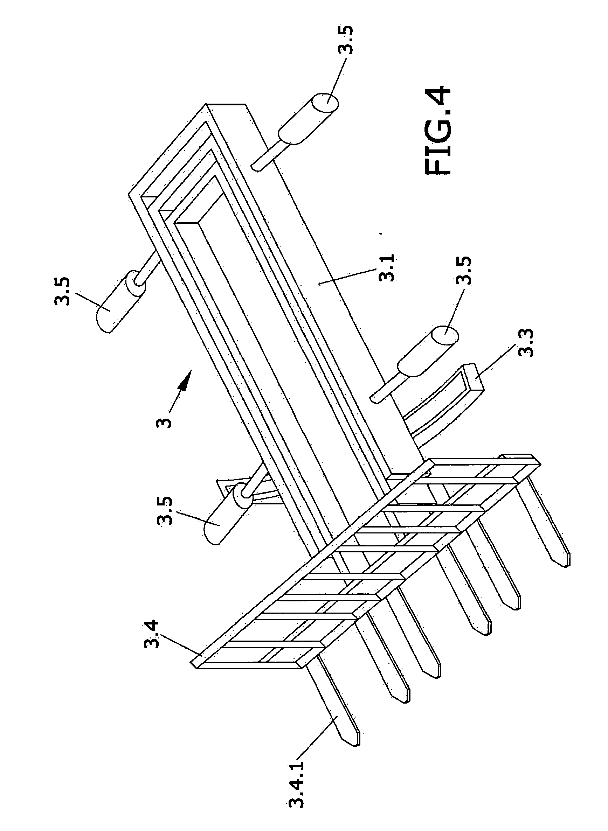

   Figures 3 and 4 show how the orientation is achieved due to the presence of a first support point (3.2)which only permits rotation by pivoting on itself; and a second support point (3.3) in the form of a guiding arc which enables that rotation to take place round the first support point (3.2).

## Claims

1. - Device for loading and unloading vehicles **characterised in that** it essentially comprises:
• A support base (5).
• an extensible horizontal structure (3.1) which is provided with fixed and mobile components which permit extension,
• a support point situated on the support base (5)
where said support point links the support base (5) to the fixed components of the extensible structure (3.1).
• a load (2) carrying structure (3.4) situated solid to the mobile components of the extensible structure (3.1).
where the extensible structure (3.1) enables the load (2) carrying structure (3.4) to be situated between a point of the support base a(5) and a point of the loading platform (1) of the vehicle.

2. - Device for loading and unloading vehicles according to claim 1 **characterised in that** the extensible structure (3.1) is provided with a second support point.

3. - Device for loading and unloading vehicles according to claim 1 **characterised in that** the extensible structure (3.1) is capable of rotating in respect of a vertical axis.

4. - Device for loading and unloading vehicles according to claim 3 **characterised in that** the rotation takes place round a support point (3.2, 3.3).

5. - Device for loading and unloading vehicles according to claim 2 and 4 **characterised in that** the rotation takes place round a point and the other support point serves as a guide in the rotation.

6. - Device for loading and unloading vehicles according to claims 2 and 3 **characterised in that** the rotation takes place by means of two support points (3.2, 3.3) so that both define a rotation arc.

7. - Device for loading and unloading vehicles according to claim 1 **characterised in that** the load (2) support structure (3.4) is able to rotate in respect of a vertical axis.

8. - Device for loading and unloading vehicles according to claim 1 **characterised in that** the load (2) support structure (3.4) is able to rotate according to a horizontal pitching axis.

9. - Device for loading and unloading vehicles according to claim 1 **characterised in that** the load (2) support structure (3.4) may be moved horizontally.

10. - Device for loading and unloading vehicles according to claim 1 **characterised in that** the load (2) support structure (3.4) may be raised.

11. - Device for loading and unloading vehicles according to claim 1 **characterised in that** the extensible element (3.1) is provided with various extension sections.

12. - Device for loading and unloading vehicles according to claim 1 **characterised in that** the extensible structure (3.1) is provided with support wheels (3.6) .

13. - Device for loading and unloading vehicles according to claim 1 **characterised in that** the extensible structure (3.1)may be raised at the end where the support structure (3.4) is situated.

14. - Device for loading and unloading vehicles according to claims 12 and 13 **characterised in that** capacity for elevation at the end of the extensible structure (3.1) where the support structure (3.4) is situated is obtained by means of support wheels (3.6).

15. - Device for loading and unloading vehicles according to claim 1 **characterised in that** the load (2) support structure (3.4) incorporates claws (3.4.1).

16. - Device for loading and unloading vehicles according to claim 1 **characterised in that** some or all the movements are propelled by hydraulic actuators.

17. - Vehicle loading procedure making use of a device according to any of the previous claims **characterised in that** it includes at least the following stages:
• deposit of the load (2) in the free space or reception area of the load (2) situated between the device and the vehicle,
• the load (2) is situated on the load support structure (3.4) by means of partial extension of the extensible structure (3.1),
• the load (2) is carried into the vehicle interior by extending the extensible structure (3.1) to its final position within the vehicle.

18. - Procedure for loading vehicles according to claim 17 **characterised in that** prior to depositing the load (2) in the free space or reception area of the load (2) situated between the device and the vehicle, the device (3) is taken to its pick up position.

19. - Procedure for loading vehicles according to claim 17 **characterised in that** having deposited the load (2) in the interior of the vehicle by means of the extensible structure (3.1) the device (3) is taken to its pick up position.

20. - Vehicle loading procedure making use of a device according to any of the previous claims 1 to 18 **characterised in that** it includes at least the following stages:
• the extensible structure (3.1) is extended until it faces the load (2) support structure (3.4)within the vehicle,
• the load (2) and the support structure (3.4) are picked up,
• when the extensible structure (3.1) retracts until it situates the load (2) in the free space or reception area of the load (2) situated between the device and the vehicle,

21. - Procedure for loading vehicles according to claim 20 **characterised in that** prior to depositing the load (2) in the free space or reception area of the load (2) situated between the device and the vehicle, the device (3) is taken to its pick up position.

22. - Procedure for loading and unloading vehicles according to claims 17 to 21 **characterised in that** prior to transferring the load (2) it is raised.

23. - Procedure for loading and unloading vehicles according to any of claims 17 to 21 **characterised in that** prior to transferring the load (2) it is lowered.

24. - Procedure for loading and unloading vehicles according to any of claims 17 to 23 **characterised in that** in any of the operations adjustments may be made to the orientation and positioning of the support structure (3.4) of the load (2) through mobility means incorporated in the load (2) support structure (3.4).
